(19) Europäisches Patentamt
European Patent Office
Office européen des brevets

(11) EP 1 568 745 A1

(12) EUROPEAN PATENT APPLICATION

(43) Date of publication:
**31.08.2005 Bulletin 2005/35**

(51) Int Cl.⁷: **C09D 191/00**, B27K 3/15, B27K 3/34

(21) Application number: **05101331.6**

(22) Date of filing: **22.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **27.02.2004 SE 4004727**

(71) Applicant: **Calignum Technologies AB**
**412 88 Göteborg (SE)**

(72) Inventors:
- **Göthe, Sven**
**168 50 Bromma (SE)**
- **Castwall, Lennart**
**184 41 Akersberga (SE)**

(74) Representative: **Axell, Kristina et al**
**Albihns Stockholm AB,**
**Box 5581**
**114 85 Stockholm (SE)**

# (54) Composition comprising an initiator and a method of treating wood with the composition

(57) The present invention refers to a composition comprising a vegetable oil and a solvent, wherein the composition also comprises a hydrogen donor and an initiator, wherein the initiator has the formula (I):

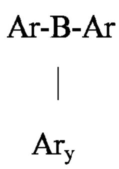

(I)

wherein Ar=aromatic group, $Ar_y$=0 or Ar and B=I or S.

The present invention further refers to a method of treating wood with a composition wherein the method comprises the steps of

n) surface coating the wood with the composition or
o) impregnating the wood with the composition, and
p) heating the coated or impregnated wood to a temperature of at least 40 °C for at least 20 minutes.

Another subject of the present invention is a method of producing a composition.

EP 1 568 745 A1

## Description

### Technical field

The present invention relates to a composition comprising a vegetable oil, optionally a solvent, a hydrogen donor and an initiator, a method of producing the composition and a method of treating wood with the composition.

### Background

Impregnation of wood in different applications can improve the water resistance. Commonly used impregnation mediums are air drying oils that are dried at room temperature and cured by an oxidation mechanism. To complete the curing of the oil in the impregnated wood, a 3 to 6 weeks time period is required. Many different oils are used and one of the oils used is Tung Oil. The Tung oil is usually diluted in n-paraffin to lower the viscosity and to achieve better impregnation results.

In the case of oxidation curing of the oil, the surface layer is first cured and then the layer next to the surface, until the interior is cured. Since diffusion of oxygen becomes slower when the oil is cured layer by layer from outside to interior, it needs a long time to cure. The middle of the wood is some times not cured at all. Some efforts to improve the curing of oil have been to use driers in the oil. The driers have been for example cobalt salts. However, when impregnating wood, a through-penetrating curing of the oil has not been achieved or has not been achieved in a reasonable time. Therefore, there is a need of an improved method of impregnation of wood.

### Short description of the invention

The present invention solves the problem above by a composition comprising a vegetable oil, optionally a solvent, a hydrogen donor and an initiator. The initiator forms a cation and/or a free radical, when the initiator is decomposed above room temperature. The curing of the oil does not use the oxidation mechanism, whereby the curing mechanism does not need the penetration of the oxygen into the impregnated wood. This makes the impregnated wood impregnated through and the impregnation medium is fully cured.

The present invention also discloses a method of producing the composition and a method of treating wood with the composition.

### Detailed description of the invention

The present invention discloses a composition comprising a vegetable oil and optionally a solvent, wherein the composition also comprises a hydrogen donor and an initiator, wherein the initiator has the formula (I):

$$\begin{array}{c} \text{Ar-B-Ar} \\ | \\ \text{Ar}_y \end{array} \qquad \text{(I)}$$

wherein Ar=aromatic group, $Ar_y$=0 (zero) or Ar, and B=I or S.

The initiator forms a cation and/or a free radical above room temperature, which will be described further below. This composition is used for treating wood for impregnation. Thus, the present invention also refers to a method of treating wood with the composition.

The present invention has used a combination of a free radical and cationic mechanism when curing the oil. By the use of the free radical and cationic mechanism the oil can, in particular the Tung oil, be completely dried after 0,5 - 4 hours. The generation of free radicals and cations can be achieved by a thermal unstable initiator. The initiator will degrade and curing will take place at temperatures above 40°C. By the use of the free radical and cationic mechanism the oil be can cured at the same time in the interior as the surface towards the air.

By curing the oil at elevated temperature and the use of the free radical and cationic mechanism, the oil can be cured at the same time in the interior as the surface towards the air, which gives the solvent (for Tung oil n-paraffin) a possibility to evaporate. In the case of oils cured by the today used oxidation mechanism, the solvent to a large extent is caught in the wood due to that the surface is sealed first when the curing starts. Further, the impregnation media (oil) is mainly cured on the surface and not in the interior of the wood.

The composition according to the present invention comprises an oil chosen among Tung oil, soya bean oil, linseed oil, castor oil, safflower oil, perilla oil and tall oil. The solvent is chosen among aliphatic or aromatic solvents and is preferably chosen among n-paraffin and white spirit.

The initiator can be chosen from arylsulfonium salts or aryliodonium salts. Preferably, the initiator is a triarylsulfonium salt or a diaryliodonium salt. The triarylsulfonium salt or diaryliodonium salt is used in the composition in combination with a hydrogen donor. The initiator is thermally unstable at temperatures above 40°C dependent on its chemical structure. The hydrogen donor is chosen among tertiary bonded hydrogens on hydrocarbons, alcohols and amines as additives. The vegetable oil or the solvent could also work as a hydrogen donor.

Examples of initiators, which can be used, are arylsulfonium salt, Degussa KI-85 (Degussa), Cyracure UVI-6922 or Cyracure UVI-6976 (Union Carbide), aryliodonium salts from GE and Rhone Poulenc.

All types of wood can utilize the free radical and cationic mechanism to cure the oil. The curing technology can be used for both natural and compressed wood.

When the treated wood with the composition is heated, the initiator is decomposed and forms a cation and/or a free radical, which participate in the curing mechanism. This curing mechanism is effected through the whole of the wood comprising the wood, not only on the surface. Hereby, a complete curing of the composition is effected. This is an advantage compared to the prior art oxidative curing of oils. However, the method may also be used for surface treatment, since this is an effective way of surface coating wood.

The reaction mechanism is described below. The initiator can form both free radicals and cations. The polymerization of the oil is probably a hybrid reaction by both free radical reactions and cationic reactions. Without wishing to be bound by any particular theory, the applicant assumes that the reactions are as follows.

$$Ar_3S^+X^- \rightarrow Ar_2S^{+\cdot}X^- + Ar\cdot \quad \text{(the reaction starts at elevated temperature)}$$

$$Ar_2^{+\cdot}X^- + ZH \rightarrow Ar_2S\cdot + Z\cdot + HX$$

$$Ar_2I^+X^- + ZH \rightarrow ArI + Z\cdot + HX + Ar\cdot \quad \text{(the reaction starts at elevated temperature)}$$

ZH = hydrogen donator agent
X = $BF_4$-, $PF_6$-, $SbF_6$- and others (counter ions in the salt)

The present invention preferably refers to a composition wherein the composition comprises

a) 10-100 percent by weight of oil,
b) 0 to 90 percent by weight of solvent,
c) 0.01-5 percent by weight of initiator and
d) 0-1.5 percent by weight of hydrogen donor chosen among tertiary bonded hydrogens on hydrocarbons, alcohols and amines as additives.

Another subject of the present invention is a method of producing a composition comprising a vegetable oil, optionally a solvent, an initiator and a hydrogen donor, wherein the method comprises the steps of that

d) the initiator is optionally solved in a part of the solvent,
e) the initiator, optionally solved in the solvent, optionally the remainder of the solvent, the oil and the hydrogen donor are brought together and mixed.

As mentioned above, the present invention refers to a method of treating wood with a composition according to above, comprising the steps of

f) surface coating the wood with the composition or
g) impregnating the wood with the composition, and
h) heating the coated or impregnated wood to a temperature of at least 40 °C for at least 20 minutes.

The method according to the present invention is preferably heated in step h) to a temperature of at least 60°C for at least 10 minutes, even more preferred to a temperature of at least 70°C for at least 10 minutes and most preferred to a temperature of at least 100°C for at least 5 minutes. The time is also preferably 50°C for at least 10

minutes. The temperature and time of the curing depends on which oil is used, on which initiator is used and the content of the solvent. Which temperature to be used can be evaluated by the person skilled in the art. This depends on the choice of oil, solvent and initiator to be used in the composition and it also depends on the content of the different parts.

The voids in the wood piece are through the new impregnation process replaced by the oil. When the oil is cured, the cells in the wood piece are "locked" giving a better water and shape stability.

The composition according to the present invention can also comprise further additives such as pigment, preservative agent, antioxidants etc.

The present invention cures the oil composition with a new mechanism and thereby the oil dries within 0,5 - 4 hours compared to 3 - 6 months with the oxidation mechanism. This open ups the possibility to on line coat or adhere the impregnated wood with lacquer in a production process. The composition according to the present invention could be used when impregnating wood, which is intended to use for parquet. The impregnated wood could also be lacquered after the impregnation treatment.

Further, the composition could be used to impregnate wood, which can be used for outside purpose, such as in outside furniture, wood for terraces etc. All wood for use indoors is possible to impregnate with the composition according to the present invention.

The present invention will now be described with the aid of the following examples.

## EXAMPLES

### Example 1

**Evaluation of adhesion of water based UV lacquer on wood impregnated with Tung oil without initiator.**

Alder and birch were impregnated with Tung oil (without initiator, vacuum time 20 minutes (0.2 to 0.3 atmospheres), normal pressure 5 minutes). The samples were dried different number of days at 20 °C. A water based UV lacquer was applied (40 µm wet, UV curing in a Minicure apparatus, the lacquer dries instantaneously). Adhesion has been measured with crosshatch method with and without tape after different time of drying the oil (number of days). The crosshatch method is described in Organic coatings, Vol. 2, page 168; John Wiley & Sons Inc., 1994, Authors: Wicks, Jones, Pappas.

Compositions used in Examples 1-7.

| Composition | |
|---|---|
| Tung oil | 33 % |
| Cyracure UVI-6976 | 0,02 %** |
| White spirit | 0,15 % |
| n-paraffin | 66,83 % |

**The content of Cyracure differs according to the examples below

Table1,

| Crosshatch* without tape | | | | |
|---|---|---|---|---|
| Type of wood/Drying time (oil) | 1 day | 3 days | 10 days | 21 days |
| Alder | 5 % | 15 % | 40 % | 65 % |
| Birch | 5 % | 10 % | 35 % | 60 % |

* Values in % indicate number of intact crosshatch squares.

Table 2,

| Crosshatch * with tape | | | | |
|---|---|---|---|---|
| Type of wood/Drying time (oil) | 1 day | 3 days | 10 days | 21 days |
| Alder | 0 % | 10 % | 30 % | 55 % |

* Values in % indicate number of intact crosshatch squares.

Table 2, (continued)

| Crosshatch * with tape | | | | |
|---|---|---|---|---|
| Type of wood/Drying time (oil) | 1 day | 3 days | 10 days | 21 days |
| Birch | 0 % | 5 % | 30 % | 50 % |

* Values in % indicate number of intact crosshatch squares.

**Evaluation of adhesion of water based UV lacquer on wood impregnated with Tung oil containing 0,5 weight-% initiator.**

Alder and birch were impregnated with Tung oil (0,5 weight-% initiator, vacuum time 20 minutes (0.2 to 0.3 atmospheres), normal pressure 5 minutes). The samples were dried 25 minutes at 80°C. A water based UV lacquer was applied (40 µm wet, UV curing in a Minicure apparatus). Adhesion has been evaluated with crosshatch method with and without tape after different time after lacquer has been applied (number of days).

Table 3,

| Crosshatch * without tape | | | | |
|---|---|---|---|---|
| Type of wood /Time after lacquer has been applied | 1 day | 3 days | 10 days | 21 days |
| Alder | 90 % | 95 % | 90 % | 95 % |
| Birch | 85 % | 90 % | 90 % | 90 % |

* Values in % indicate number of intact crosshatch squares.

Table 4,

| Crosshatch * with tape | | | | |
|---|---|---|---|---|
| Type of wood/ Time after lacquer has been applied | 1 day | 3 days | 10 days | 21 days |
| Alder | 90 % | 90 % | 90 % | 90 % |
| Birch | 90 % | 90 % | 90 % | 85 % |

* Values in % indicate number of intact crosshatch squares.

**Evaluation of adhesion of acid cured and water based UV lacquers on wood impregnated with Tung oil containing 0,5 weight-% initiator.**

Alder and birch were impregnated with Tung oil (0,5 weight-% initiator, vacuum time 20 minutes (0.2 to 0.3 atmospheres), normal pressure 5 minutes). The samples were dried 25 minutes at 80°C. A water-based UV lacquer was applied (40 µm wet, UV curing in a Minicure apparatus) and an acid curing lacquer was applied (40 µm wet, 10 minutes at 80°C). Adhesion was evaluated with crosshatch method with and without tape after 1 day of drying at normal temperature after the drying at 80°C.

Table 5,

| Crosshatch * without tape. | | |
|---|---|---|
| Type of wood / Lacquer | Acid curing | Water based UV |
| Alder | 95 % | 95 % |
| Birch | 90 % | 95 % |

* Values in % indicate number of intact crosshatch squares.

Table 6,

| Crosshatch * with tape. | | |
|---|---|---|
| Type of wood / Lacquer | Acid curing | Water based UV |
| Alder | 85 % | 85 % |
| Birch | 80 % | 85 % |

* Values in % indicate number of intact crosshatch squares.

Adhesion of the water based UV lacquer on alder and birch impregnated with Tung oil without initiator is improved with prolonged drying time for the oil in air. But the adhesion is not sufficient after 21 days, which can be seen in tables 1 and 2. Adhesion for the water based UV and the acid cured lacquers on alder and birch impregnated with Tung oil with 0,5 weight-% initiator and dried 25 minutes at 80°C passed the requirements (tables 3-6). The results show that Tung oil with 0,5 weight-% initiator and dried 25 minutes at 80°C can be lacquered directly after drying.

<u>Example 2</u>

**Evaluation of lacquering for parquet flooring construction**

Wood samples of oak, pine, birch and alder were impregnated with Tung oil containing 0,5 weight-% initiator. The impregnation process for the wood samples was done with a vacuum time on 20 minutes (0.2 to 0.3 atmospheres), normal pressure for 5 minutes and a drying time of 25 minutes at 80°C. The wood samples were glued onto a wooden substrate to resemble a parquet flooring construction.

The parquet flooring construction samples were lacquered (two days after the parquet flooring construction samples were done) with: water base coat+ UV-base coat + UV-base coat + UV-base coat + UV-top lacquer.

The lacquered samples were evaluated in a climate chamber test. The 4 different types of wood were tested in the climate chamber during 56 cycles on 4 hours each according to the following schedule:

- 20 °C, RH (Relativ humidity) 0 %
- 25 °C, RH (Relativ humidity) 65%
- 60 °C, RH (Relativ humidity) 90%
- 25 °C, RH (Relativ humidity) 65%

Results of stain resistance, crosshatch, adhesion and abrasion resistance of the samples tested in the climate chamber according to above, is shown in Table 7 below. References, treated in the same way, are also shown in Table 7.

Table 7

| System/Test | Stain resistance (shoe polish, lip stick, coffee) | Crosshatch | Adhesion (coin test) | Abrasion resistance (According to DIN standard) |
|---|---|---|---|---|
| Samples according to the invention | OK | 100 % | OK | OK |
| References (normal parquet flooring system) | OK | 100 % | OK | OK |

The climate chamber tests show that the technology according to the present invention fulfils the demands for parquet flooring and can be used on-line in a parquet flooring manufacturing line.
This can be compared with the fact that wood samples treated with Tung oil and air dried (without initiators) need minimum 2 month storage before it can be lacquered on-line in a parquet flooring manufacturing line.

Example 3

**Test of different amount of initiator**

Wood samples of alder were impregnated with Tung oil containing 0 weight-%, 0,25 weight-%, 0,5 weight-%, 0,75 weight-% and 1,00 weight-% initiator (the initiator was a 10 % by weight solution of Cyracure UVI 6976 (Mixed Triaryl sulfonium Hexafluoroantimonate Salts),Union Carbide and white spirit). The impregnation process for the wood samples was done with a vacuum time for 20 minutes (0.2 to 0.3 atmospheres), normal pressure for 5 minutes and a drying time of 25 minutes at 80°C. The samples of dried Tung oil impregnated alder wood were evaluated by a 24 hour water test.

In table 8 below the result of the water test is shown. In the water test is a droplet of water added onto the wood sample. The wood sample is evaluated for swelling.

Table 8

| Conc. initiator | 0,0 % | 0,25 % | 0,50 % | 0,75 % | 1,00 % |
|---|---|---|---|---|---|
| % of wood samples that are effected by swelling | 95 % | 75 % | 65 % | 50 % | 60 % |

Water resistance is greatly improved by adding the initiator to the Tung oil and drying it at 80°C for 25 minutes.

Example 4

**Effect of curing temperature**

Six different curing temperatures were evaluated by the water resistance test to show the effect of curing temperature.

Wood samples of alder was impregnated with Tung oil containing 0,5 weight-% initiator (the initiator was a 10 % by weight solution of Cyracure UVI 6976,Union Carbide and white spirit). The impregnation process for the wood samples was done with a vacuum time on 20 minutes (0.2 to 0.3 atmospheres), normal pressure for 5 minutes and a drying time of 20 minutes. The drying temperature was from 50°C to 130°C. The alder wood samples impregnated with Tung oil and then dried, were evaluated by a 24 hours water test.

In table 9 below is the result of the water test shown. In the water test is a droplet of water added onto the wood sample. The wood sample is evaluated for swelling.

Table 9

| Curing temperature | 50°C | 70°C | 80°C | 90°C | 110°C | 130°C |
|---|---|---|---|---|---|---|
| % of wood samples that are effected by swelling | 100 % | 65 % | 60 % | 55 % | 40 % | 20 % |

Water resistance is improved with increased temperature due to a better cross-linking of the Tung oil. Temperatures above 110°C shows tendency of surface wrinkles on the wood sample.
Temperatures above 40°C are needed to start the cross-linking process. This is due to that the initiator does not become active until temperatures above about 40°C or 50 °C are reached.

Example 5

**Effect of curing time**

Wood samples of alder was impregnated with Tung oil containing 0,5 % catalyst (the catalyst was a 10 % by weight solution of Cyracure UVI 6976,Union Carbide and white spirite). The impregnation process for the wood samples was done with a vacuum time on 20 minutes (0.2 to 0.3 atmospheres), normal pressure for 5 minutes and a drying time was varied between 5 and 30 minutes. The drying temperature was 80°C. The Tung oil impregnated alder wood samples, which were dried, were then evaluated by a 24 hours water test.

Table 10 below shows the result of the water test. In the water test is a droplet of water added onto the wood sample. The wood sample is evaluated for swelling.

Table 10

| Curing time | 5 min | 10 min | 15 min | 20min | 30 min |
|---|---|---|---|---|---|
| % of wood samples that are effected by swelling | 80 % | 60% | 45 % | 50% | 75 % |

Example 6

**Test of different initiators**

Three different initiators were evaluated. The initiators were 1) triarylsulphonium salt (PF6-), 2) triarylsulphonium salt (SbF6-) and 3) diaryliodonium salt (PF6-).

Wood samples of oak was impregnated with Tung oil containing 0,5 weight-% initiator (the initiator was a 10 % by weight solution of the initiator in white spirit).

The impregnation process for the wood samples was done with a vacuum time on 15 minutes (0.2 to 0.3 atmospheres), normal pressure for 3 minutes and a drying time of 15 minutes at 100°C. The oak wood samples, impregnated with Tung oil and then dried, were evaluated by a 24 hour water test.

Table 11 below shows the result of the water test. In the water test is a droplet of water added onto the wood sample. The wood sample is evaluated for swelling.

Table 11

| Type of initiator | 1 | 2 | 3 |
|---|---|---|---|
| % of wood samples that are effected by swelling | 55 % | 50 % | 65 % |

The triarylsulphonium salt (SbF6-) was performing best in the test.

Example 7

**Test of through curing of the oil**

Wood piecies of 12 cm x 50 cm with a thickness of 0,5 cm were impregnated with tung oil with the same process parameters as in example 4 and a drying temperature of 100 °C. The wood pieces were after drying cut in the middle in to 2 pieces (each with a length of 25 cm). Investigation of the cross section showed that the oil had penetrated through the whole cross section of the wood piece. By varying the vacuum time and normal pressure time different degrees of oil penetration into the cross section of the wood piece can be achieved.

A test to check if the tung oil was cured in the interior of the wood piece was performed by clipping the cut wood piece with a pincers. No liquid tung oil could be pressed out from the wood piece. Tests with tung oil without catalyst showed after the same process when the wood piece was clipped with the pincers that droplets came out from the interior of the wood piece.

**Claims**

1. Composition comprising a vegetable oil and optionally a solvent, **characterised in that** the composition also comprises a hydrogen donor and an initiator, wherein the initiator has the formula (I):

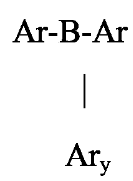

(I)

wherein Ar=aromatic group, $Ar_y$=0 (zero) or Ar and B=I or S.

2. Composition according to any of the preceding claims, **characterised in that** the oil is chosen among Tung oil,

soya bean oil, linseed oil, castor oil, safflower oil, perilla oil and tall oil.

**3.** Composition according to any of the preceding claims, **characterised in that** the solvent is chosen among aliphatic or aromatic solvents.

**4.** Composition according to any of the preceding claims, **characterised in that** the solvent is chosen among n-parafin and white spirit.

**5.** Composition according to any of the preceding claims, **characterised in that** the initiator is chosen among arylsufonium salts or aryliodonium salts.

**6.** Composition according to any of the preceding claims, **characterised in that** the initiator is triarylsufonium salt or diaryliodonium salt.

**7.** Composition according to any of the preceding claims, **characterised in that** the hydrogen donor is chosen among tertiary bonded hydrogens on hydrocarbons, alcohols and amines as additives.

**8.** Composition according to any of the preceding claims, **characterised in that** the composition comprises

a) 10-100 percent by weight of oil,
b) 0 to 90 percent by weight of solvent,
c) 0.01-5 percent by weight of initiator and
d) 0-1.5 percent by weight of hydrogen donor as chosen in claim 7.

**9.** Method of producing a composition comprising a vegetable oil, optionally a solvent, an initiator and a hydrogen donor, according to any of claims 1 to 8, **characterised in that** the method comprises the steps of that

i) the initiator is optionally solved in a part of the solvent,
j) the initiator, optionally solved in the solvent, optionally the remainder of the solvent, the oil and the hydrogen donor are brought together and mixed.

**10.** Method of treating wood with a composition according to any of claim 1 to 8, **characterised in that** the method comprises the steps of

k) surface coating the wood with the composition or
l) impregnating the wood with the composition, and
m) heating the coated or impregnated wood to a temperature of at least 40 °C for at least 20 minutes.

**11.** Method of treating wood according to claim 10, **characterised in that** the wood in step h) is heated to a temperature of at least 60 °C for at least 10 minutes.

**12.** Method of treating wood according to claim 11, **characterised in that** the wood in step h) is heated to a temperature of at least 70 °C for at least 10 minutes.

**13.** Method of treating wood according to claim 12, **characterised in that** the wood in step h) is heated to a temperature of at least 100 °C for at least 5 minutes.

European Patent Office

# EUROPEAN SEARCH REPORT

Application Number
EP 05 10 1331

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/108810 A1 (WILLIAMSON SUE ELLEN ET AL) 12 June 2003 (2003-06-12) * paragraphs [0020], [0028], [0041], [0055], [0060] - [0063] * | 1-3,5-7, 9 | C09D191/00 B27K3/15 B27K3/34 |
| A | | 4,8, 10-13 | |
| X | US 6 248 405 B1 (KASTL BERND ET AL) 19 June 2001 (2001-06-19) * claims 1,5,15,17 * | 1 | |
| A | US 5 318 808 A (CRIVELLO ET AL) 7 June 1994 (1994-06-07) * column 7, lines 3-9; claims 1,2,4 * | 1-13 | |
| A | US 2004/006150 A1 (MURRAY HELEN M ET AL) 8 January 2004 (2004-01-08) * table 2a * | 1-9 | |
| A | WO 96/38275 A (VALTION TEKNILLINEN TUTKIMUSKESKUS; VIITANIEMI, PERTTI; JAEMSAE, SAILA) 5 December 1996 (1996-12-05) * the whole document * | 10-13 | TECHNICAL FIELDS SEARCHED (Int.Cl.7) |
| A | WO 92/19429 A (SCHIRNIG, ULRICH, HERBERT) 12 November 1992 (1992-11-12) * the whole document * | 10-13 | C09D G03F B27K |

The present search report has been drawn up for all claims

| Place of search | Date of completion of the search | Examiner |
|---|---|---|
| Munich | 29 June 2005 | Nissen, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1 EPO FORM 1503 03.82 (P04C01)

# ANNEX TO THE EUROPEAN SEARCH REPORT ON EUROPEAN PATENT APPLICATION NO. EP 05 10 1331

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2005

| Patent document cited in search report | Publication date | Patent family member(s) | Publication date |
|---|---|---|---|
| US 2003108810 A1 | 12-06-2003 | CN 1545528 A | 10-11-2004 |
| | | WO 03018663 A1 | 06-03-2003 |
| | | EP 1438347 A1 | 21-07-2004 |
| | | JP 2005501149 T | 13-01-2005 |
| | | TW 548289 B | 21-08-2003 |
| | | US 2003152862 A1 | 14-08-2003 |
| | | US 2004242818 A1 | 02-12-2004 |
| US 6248405 B1 | 19-06-2001 | DE 19709477 A1 | 10-09-1998 |
| | | AT 221904 T | 15-08-2002 |
| | | AU 6500098 A | 29-09-1998 |
| | | CA 2280635 A1 | 17-09-1998 |
| | | DE 59805105 D1 | 12-09-2002 |
| | | EE 9900393 A | 17-04-2000 |
| | | WO 9840427 A1 | 17-09-1998 |
| | | EP 0964882 A1 | 22-12-1999 |
| | | HU 0003799 A2 | 28-02-2001 |
| | | JP 2001514691 T | 11-09-2001 |
| | | NO 994218 A | 31-08-1999 |
| | | PL 335387 A1 | 25-04-2000 |
| | | SK 120799 A3 | 12-06-2000 |
| US 5318808 A | 07-06-1994 | NONE | |
| US 2004006150 A1 | 08-01-2004 | AU 2003253228 A1 | 06-01-2004 |
| | | EP 1516030 A1 | 23-03-2005 |
| | | WO 2004000965 A1 | 31-12-2003 |
| | | US 2005133152 A1 | 23-06-2005 |
| WO 9638275 A | 05-12-1996 | FI 952654 A | 01-12-1996 |
| | | AU 5823796 A | 18-12-1996 |
| | | WO 9638275 A1 | 05-12-1996 |
| | | SE 509980 C2 | 29-03-1999 |
| | | SE 9704395 A | 23-01-1998 |
| WO 9219429 A | 12-11-1992 | DK 84891 A | 08-11-1992 |
| | | AT 117238 T | 15-02-1995 |
| | | AU 1789092 A | 21-12-1992 |
| | | DE 69201239 D1 | 02-03-1995 |
| | | DE 69201239 T2 | 18-05-1995 |
| | | WO 9219429 A1 | 12-11-1992 |
| | | EP 0576608 A1 | 05-01-1994 |

EPO FORM P0459

For more details about this annex : see Official Journal of the European Patent Office, No. 12/82